(19) Europäisches Patentamt
European Patent Office
Office européen des brevets

(11) **EP 4 400 335 B1**

(12) **EUROPEAN PATENT SPECIFICATION**

(45) Date of publication and mention
of the grant of the patent:
**04.03.2026 Bulletin 2026/10**

(21) Application number: **22886362.7**

(22) Date of filing: **06.05.2022**

(51) International Patent Classification (IPC):
**B60C 11/12** (2006.01)

(52) Cooperative Patent Classification (CPC):
**B60C 11/1204; B60C 11/1236;** B60C 11/0306;
B60C 2011/1213; B60C 2011/1245; B60C 2011/129

(86) International application number:
**PCT/JP2022/019599**

(87) International publication number:
**WO 2023/074025 (04.05.2023 Gazette 2023/18)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.10.2021 JP 2021176992**

(43) Date of publication of application:
**17.07.2024 Bulletin 2024/29**

(73) Proprietor: **BRIDGESTONE CORPORATION**
**Chuo-ku**
**Tokyo 104-8340 (JP)**

(72) Inventors:
• **MATSUMOTO Hiroyuki**
**Tokyo 104-8340 (JP)**

• **KAJI Yoshio**
**Tokyo 104-8340 (JP)**
• **NOMURA Hiroshi**
**Tokyo 104-8340 (JP)**

(74) Representative: **Marks & Clerk LLP**
**15 Fetter Lane**
**London EC4A 1BW (GB)**

(56) References cited:
EP-A1- 3 960 502          JP-A- 2009 078 654
JP-A- 2014 193 629       JP-A- 2017 538 627
JP-A- H0 616 016          JP-A- H03 186 407
JP-A- H09 328 004

EP 4 400 335 B1

## Description

### TECHNICAL FIELD

This invention is related to a pneumatic tire.

### BACKGROUND

Conventionally, the land portion of the tread portion of pneumatic tires, especially of studless tires, has been provided with narrow grooves called sipes to improve on-ice gripping performance. The sipes allow water that gushes onto the tire contact patch as the icy road surface melts to drain out of the contact patch, thereby improving on-ice gripping performance.

The prior art that improves on-ice gripping performance by disposing sipes at a high density while minimizing the reduction in rigidity of the land portion, has been proposed (For example, Patent Document 1).

### CITATION LIST

Patent Literature

PTL 1: JP 2005-186827 A1

PTL 2: JPH0616016A discloses a tread that is provided with a plurality of main grooves and a lot of sub-grooves communicating with the main grooves, on its surface and has a plurality of block lands partitioned by these grooves. These block land parts are provided with vein-shaped combined notches having trunk notches which extend from the main grooves or the sub-grooves respectively and allow their tips to stay inside the substances of the land parts and branch notches which extend in different directions from the trunk notches to both sides and allow their tips to stay inside of the substances of the lands parts respectively.

PTL 3: JP2014193629A discloses a pneumatic tire that comprises on a tread, a plurality of main grooves and a plurality of blocks which are partitioned by the main grooves and have a sipe. The sipe comprises a main body which has at least one end in the block and extends to a tire width direction in the end, and a circumferential direction part which has a protrusion and a recess engaging with each other on a facing sipe wall face, and extends to a tire circumferential direction through the end of the main body.

PTL 4: JP2017538627A discloses a tread for a tire for a construction vehicle, wherein the tread comprises a plurality of blocks, each block being bounded by a lateral or inclined groove and a circumferential groove, the tread being such that the plurality of blocks are provided with a sipe having three branches, the three branches having a common end, the first branch being oriented in a lateral or inclined direction, the second branch and the third branch each opening into the lateral groove that bounds the block when new, Each sipe has an angle formed between the first branch and the second branch that is at least equal to 100° and at most equal to 125°, and an angle formed between the first branch and the third branch that is at least equal to 100° and at most equal to 125°, and the sipe has lengths of each of the three branches measured on a new tread surface, after wear corresponding to 45% to 70% of the total wearable thickness, which are shorter than the respective lengths measured on the tread surface when new.

PTL 5: JP2009078654A discloses a pneumatic tire in which a land portion is divided by at least two circumferential grooves extending along a tread peripheral line and a plurality of lateral grooves extending in a tread width direction, a width direction sipe extending in the tread width direction in the land and a circumferential sipe intersecting the width direction sipe and opened to the lateral grooves at one end or both ends are formed.

PTL 6: JPH03186407A discloses a block pattern of a tire that is formed of many blocks partitioned by a plurality of main grooves in a tire peripheral direction and a plurality of subgrooves traversing these main grooves. Here width direction spies, extending in a tire width direction, is arranged to form small blocks. Also short peripheral direction sipes, extending in the tire peripheral direction, are arranged so as to traverse the width direction sipes. At least one end part of the width direction sipe is connected to the main groove. On the other hand, one end part of the peripheral direction sipe is connected to width direction sipe while the other end part thereof is terminated inside each small block.

PTL 7: JPH09328004A discloses a land part of a tread surface that is composed of a block with vertical and horizontal grooves. A plurality of sipings extended in a tire axial direction are formed in the block, and for the block, an uneven wear preventing block having an auxiliary siping opened in the siping for its one end, extended in a direction intersecting the same and having a length of 1 to 3mm is provided. Thus, when a braking force is applied, the deformation easily occurs in the surface parts of small book pieces formed by the siping, a grounding pressure distribution is made uniform and thereby H/T wear resistance is improved without losing on-snow traveling performance. Further, preferably, the auxiliary siping is formed to have a width of 0.2 to 0.7mm. PTL 8: EP3960502A1 discloses a pneumatic tire in which a plurality of first land portions are arrayed adjacent to each other in a tire circumferential direction, and a plurality of second land portions are arrayed adjacent to each other in the tire circumferential direction. Moreover, the first land portions and the second land portions are each arrayed in a staggered manner along a tire equatorial plane. Additionally, the first land portions and the second land portions each include a plurality of through grooves that extend through the land portions and open to the pair of inclined main grooves and a plurality of blocks defined by the through grooves.

## SUMMARY

(Technical Problem)

However, the art in Patent Document 1 was not sufficient to balance the rigidity of the land portion and the water drainage by the sipes, and there was room for improvement in improving on-ice gripping performance. [0006] It is therefore an object of the present invention to provide a pneumatic tire with improved on-ice gripping performance.

(Solution to Problem)

The gist structure of the invention is according to claim 1.
Here, the "tread surface" refers to the outer circumferential surface of the pneumatic tire that is in contact with the road surface when the pneumatic tire is assembled on an applicable rim, filled with prescribed internal pressure, and rolled under a maximum load. In addition, the "sipe" in the "connected sipe" means the one whose sipe width is 1 mm or less in the area of 50 % or more of the sipe depth when the tire is assembled on the applicable rim, filled with the prescribed internal pressure, and unloaded. Here, the sipe depth is measured perpendicular to the tread surface in the above condition, and the sipe width is measured parallel to the tread surface in a cross section perpendicular to the extending direction of the sipe on the tread surface.
As used herein, the "applicable rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States (That is, the "rim" above includes current sizes as well as future sizes to be listed in the aforementioned industrial standards. An example of the "size as described in the future" could be the sizes listed as "FUTURE DEVELOPMENTS" in the ETRTO 2013 edition.). For sizes not listed in these industrial standards, the "applicable rim" refers to a rim with a width corresponding to the bead width of the tire. In addition, the "prescribed internal pressure" refers to the air pressure (maximum air pressure) corresponding to the maximum load capacity of a single wheel in the applicable size and ply rating, as described in the aforementioned JATMA, and others. In the case that the size is not listed in the aforementioned industrial standards, the "prescribed internal pressure" refers to the air pressure (maximum air pressure) corresponding to the maximum load capacity specified for each vehicle in which the tire is mounted. Further, the "maximum load" refers to the load corresponding to the above maximum load capacity.

(Advantageous Effect)

According to the present invention, it is possible to provide a pneumatic tire with improved on-ice gripping performance.

## BRIEF DESCRIPTION OF THE DRAWINGS

In the accompanying drawings:

FIG. 1 illustrates the tread pattern of a pneumatic tire according to one embodiment of this invention;
FIG. 2 is a plan view illustrating the configuration of the connected sipe;
FIG.3 illustrates the dimensions of the connected sipes;
FIG. 4 is a table providing Examples and Comparative Examples.
FIG.5 provides the relationship between block rigidity and actual footprint area under shear; and
FIG.6 provides the relationship between edge density and actual footprint area.

## DETAILED DESCRIPTION

The following is a detailed illustration of the embodiment of this invention with reference to the drawings.
First, the internal structure, etc. of the pneumatic tire (hereinafter referred to simply as "tire") can be the same as that of a conventional tire. As an example, the tire may have a pair of bead portions, a pair of sidewall portions connected to the pair of bead portions, and a tread portion disposed between the pair of sidewall portions. Also, the tire may have a carcass straddling toroidally between the pair of bead portions, and a belt disposed on the outer side in the tire radial direction of the crown portion of the carcass.
Hereafter, unless otherwise noted, dimensions, etc. refer to those when the tire is mounted on the applicable rim, filled to the prescribed internal pressure, and unloaded.

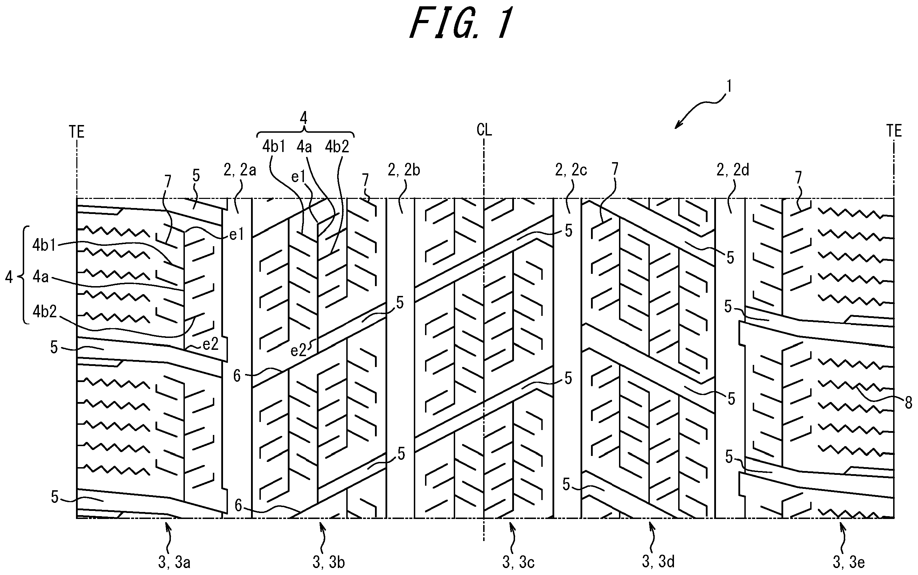

Figure 1 illustrates the tread pattern of the pneumatic tire according to one embodiment of this invention. As illustrated in Figure 1, the tire has one or more (four in the illustrated example) circumferential main grooves 2 (2a to 2d) extending in the tire circumferential direction on the tread surface 1. The number of the circumferential main grooves 2 is not limited to this example and can be changed as needed.

The width (opening width) of the circumferential main groove 2 is not particularly limited, but can be 4 to 15 mm, for example, and the depth (maximum depth) of the circumferential main groove 2 is not particularly limited, but can be 6 to 20 mm, for example. In the illustrated example, the circumferential main groove 2 extends straightly in the tire circumferential direction, but it can also extend in a zigzag or flexing manner. The circumferential main groove 2 may be inclined at an angle of 5° or less with respect to the tire circumferential direction.

As illustrated in Figure 1, the circumferential main grooves 2 and the tread edges TE form a plurality (five in the illustrated example) of land portions 3 (3a to 3e). That is, the land portion 3a is formed by the tread edge TE and the circumferential main groove 2a, the land portion 3b is formed between the circumferential main grooves 2a and 2b, the land portion 3c is formed between the circumferential main grooves 2b and 2c, the land portion 3d is formed between the circumferential main grooves 2c and 2d, and the land portion 3e is formed by the tread edge TE and the circumferential main groove 2d. Thus, the tire has at least one land portion 3.

A plurality of width direction grooves 5 extending in the tire width direction are arranged at intervals in the tire circumferential direction on each of the land portions 3a to 3e. In the land portions 3a, 3c, 3d, and 3e, the width direction grooves 5 are connected to two adjacent circumferential main grooves 2, thus the land portions 3a, 3c, 3d, and 3e are divided into blocks. On the other hand, in the land portion 3b, the width direction grooves 5 are connected to the circumferential main groove 2b at one end and terminates within land portion 3b at the other end, thus the land portion 3b is a rib-shaped land portion (a land portion not completely divided circumferentially by the width direction grooves 5). The other end of the width direction groove 5A is connected to a width direction sipe 6 extending in the tire width direction, and the width direction sipe 6 extends from the other end of the width direction groove 5 and is connected to the circumferential main groove 2a.

The width of the width direction groove 5 (the opening width, or the maximum width if the groove width varies) is not particularly limited, but can be 2 to 10 mm, for example. The depth (maximum depth) of the width direction groove 5 is not limited, but can be 5 to 20 mm, for example. Furthermore, the width direction groove 5 preferably extends in the tire width direction or be inclined at an angle of more than 0° and 45° or less with respect to the tire width direction. The width direction grooves 5 can be arranged at equal intervals in the tire circumferential direction, or may be arranged with various pitch intervals in order to reduce pattern noise.

The sipe width (the opening width) of the width direction sipe 6 is not particularly limited, but can be 0.3 to 1 mm. The sipe depth (maximum depth) of the width direction sipe 6 is not limited, but can be 3 to 10 mm, for example. Furthermore, the width direction sipe 6 preferably extends in the tire width direction or be inclined at an angle of more than 0° and 45° or less with respect to the tire width direction.

Note, that the land portions 3a and 3e are provided with a plurality of width direction sipes 8 extending from the tread edge TE and terminating in the land portions at approximately equal intervals in the tire circumferential direction.

Here, in this tire, one or more connected sipes 4 are disposed on at least one (in this example, all of the land portions 3) of the land portions 3. In the illustrated example, one or more connected sipes 4 are disposed in each block defined by the width direction grooves 5 (or in each portion defined by the width direction groove 5 and the width direction sipe 6).

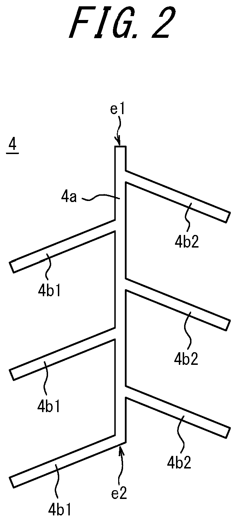

Figure 2 is a plan view of the connected sipe 4. As illustrated in Figures 1 and 2, the connected sipe 4 has a main portion 4a extending in a first predetermined direction (the tire circumferential direction according to the invention) and a side portion 4b1, 4b2 extending from the main portion 4a to the side of the main portion 4a at an angle with respect to the first predetermined direction (to the tire circumferential direction according to the invention), thus the connected sipe 4 is a branch-like sipe consisting of these connected together. The connected sipe 4 is a branch-shaped sipe, comprising these connected together. The main portion 4a and the side portion 4b1, 4b2 are sipe portions. The side portion has a first side portion 4b1 disposed on one side of the main portion 4a and a second side portion 4b2 disposed on the other side of the main portion 4a, and the first side portion 4b1 and the second side portion 4b2 are arranged alternately in the tire circumferential direction. In the illustrated example, the first side portion 4b1 extends to one side in the tire width direction (left side in the figure) and terminates in the land portion 3, and the second side portion 4b2 extends to the other side in the tire width direction (right side in the figure) and terminates in the land portion 3.

The main portion 4a1 extends in the tire circumferential direction in the illustrated example, but may extend at an inclination angle of 15° or less with respect to the tire circumferential direction. In addition, in the illustrated example, the land portions 3a, 3c, 3d, and 3e are block-shaped land portions, and the land portion 3b is defined by the width directional sipe 6, although it is a rib-shaped land portion. Thus, the extending length of the main portion 4a is shorter than the circumferential length of the block (or the block-shaped portion defined by the width direction sipe 6). Furthermore, at least one end of the main portion 4a terminates within the land portion 3. In the illustrated example, only one end e1 of the main portion 3a in the first predetermined direction (in the tire circumferential direction in this example) terminates in the land portion 3, while the other end e2 is connected to the width direction groove 5 or the width direction sipe 6. On the other hand, when the land portion 3 is a rib-shaped land portion, the main portion 4a may also extend continuously for one round in the tire circumferential direction.

The side portion 4b1, 4b2 can extend at an inclination angle of, for example, 45 to 90° with respect to the first predetermined direction, which is the extending direction of the main portion 4a, although this is not particularly limited. Typically, the side portion 4b1, 4b2 extends in the tire width direction or at an angle with respect to the tire width direction (e.g., the inclination angle can be 45° or less with respect to the tire width direction). In the illustrated example, both of the side portions 4b1 and 4b2 extend toward one side of the extending direction of the main portion 4a (one side in the tire circumferential direction), but the first side portion 4b1 and the second side portion 4b2 may extend on opposite sides of the extending direction of the main portion 4a from each other (in this case, the side portion 4b1 may extend to one side or the other side).

Here, when the length in the tire width direction (when projected in the tire width direction) of the connected sipe 4 is w1 (mm) and the depth (maximum depth) of the micro sipes (4a, 4b1, 4b2) comprising the connected sipe is h (mm), $w1 \times h$ is 150 ($mm^2$) or less. This is because by making the connected sipes 4 smaller, the connected sipes 4 can be densely arranged to further improve on-ice performance. For the same reason, it is more preferable that $w1 \times h$ be 100 ($mm^2$) or less and even more preferable that it be 50 ($mm^2$) or less.

In addition, when the number of connected sipes 4 in the land portion 3 is n, the maximum width of the land portion 3 in the tire width direction is BW (mm), the "equivalent length of the land portion in the tire circumferential direction" obtained by dividing the outer contour area (the area enclosed by the outer contour) ($mm^2$) of the land portion 3 by BW (mm) is BL (mm), the equivalent number of sipes N (the number of sipes converted to transverse sipes provided completely across the land portion) is defined as $w1 \times n/BW$, the average sipe spacing in the tire circumferential direction is expressed as $BL/(N + 1)$, and the sipe density SD is defined as the inverse of the average sipe spacing in the tire circumferential direction, and it is expressed as $SD = (N + 1)/BL = ((w1 \times n/BW) + 1)/BL$, SD is 0.15 (1/mm) or more. This is because the high density of the connected sipes can further improve on-ice performance. For the same reason, the sipe density SD of 0.20 (1/mm) or more is more preferable, and 0.30 (1/mm) or more is even more preferable.

Note, that the number of connected sipes n, the maximum width of the land portion in the tire width direction BW, and the outer contour area of the land portion are the values measured in the expanded view of the tread portion. The "outer contour area" refers to the area enclosed by the outer contour in the expanded view of the tread portion, and therefore, even if non-ground portions such as sipes, small holes, narrow grooves, etc. are disposed within the land portion, the area does not exclude the area of the sipes, small holes, narrow grooves, etc.

The following is a description of the effects of this pneumatic tire.

In the pneumatic tire of this embodiment, first, one or more connected sipes 4 are disposed on at least one of the land portions 3, and the connected sipes 4 have a main portion 4a extending in the first predetermined direction and the side portion 4b1, 4b2 extending from the main portion 4a to the side of the main portion 4b at an angle with respect to the first predetermined direction. Therefore, while these sipe portions cut the water film, water can be discharged in the first predetermined direction (the tire circumferential direction in this example) by the main portion 4a, and water can also be discharged to the side by the side portions 4b1 and 4b2 connected to the main portion 4a, thus enabling efficient water film removal. In addition, the side portion has the first side portion 4b1 disposed on one side of the main portion 4a and a second side portion 4b2 disposed on the other side of the main portion 4a, and the first side portion 4b1 and the second side portion 4b2 are arranged alternately in the tire circumferential direction. Therefore, these side portions can be densely arranged, further increasing the effectiveness of the above water film removal.

On the other hand, since the side portions 4b1 and 4b2 terminate within the land portion 3, the reduction in the rigidity of the land portion 3 can be controlled compared to the case where the block is completely divided in the tire circumferential direction to form a block piece by a width direction sipe extending between two circumferential main grooves, for example.

As described above, the pneumatic tire of this embodiment can effectively remove water film while preventing a reduction in the rigidity of the land portion 3, thereby improving on-ice gripping performance.

In particular, in this embodiment, at least one end e1 of the main portion 4a terminates within the land portion 3, which further prevents the reduction in the rigidity of the land portion 3 and further improves the on-ice gripping performance. From the viewpoint of preventing the reducing in the rigidity of the land portion 3, it is preferable that both ends of the main portion 4a terminate within the land portion 3, but from the viewpoint of effectively removing water film, the other end 4e or both ends may be connected to a width direction groove or a width direction sipe. In this example, one end terminates within the land portion 3 and the other end is connected to the width direction groove 5 or the width direction sipe 6, thus ensuring rigidity of the land portion at one end while providing effective water film removal at the other end.

Furthermore, if $w1 \times h$ is in the above range, the connected sipes can be disposed more densely, which can further improve on-ice gripping performance. In addition, if the sipe density SD is within the above range, the connected sipes will be densely arranged, which will improve the effectiveness of water film removal and further enhance on-ice gripping performance.

Moreover, according to the invention the main portion 4a extends in the tire circumferential direction. The side portions 4b1 and 4b2 extend in the tire width direction or at an angle with respect to the tire width direction as in this example. This allows the main portion 4a to have an edge component in the tire circumferential direction (edge component relative to the tire width direction), which improves the lateral gripping performance during cornering. In addition, the side portions 4b1 and 4b2 provide an edge component in the tire width direction (edge component relative to the tire circumferential direction), which improves on-ice traction performance and on-ice braking performance in straight running.

As illustrated in Figure 1, the tire of this embodiment has land portions 3b, 3c, and 3d, in which a plurality of rows of connected sipes 4 (in the illustrated example, a plurality of connected sipes 4 are arranged at intervals in the tire circumferential direction to form one row) are arranged in the second predetermined direction (in this example, the tire width direction). First, this will increase the effectiveness of water film removal compared to disposing only one row of connected sipes 4 on each land portion 3. Note, that when the main portion 4 extends continuously for one round in the tire circumferential direction, one connected sipe forms one row. In addition, the second predetermined direction may be inclined with respect to the tire width direction, and the inclination angle with respect to the tire width direction may be more than 0° and 30° or less, for example.

In addition, as illustrated in Figure 1, two rows adjacent to each other in the second predetermined direction are arranged phase-shifted in the tire circumferential direction, such that the side portion (4b1 or 4b2) of the connected sipe 4 of one row and the side portion (4b2 or 4b1) of the connected sipe 4 of the other row, which is an adjacent row adjacent to the one row in the second predetermined direction, are arranged alternately in the tire circumferential direction. This allows for a higher density of the connected sipes 4, which is more effective in removing water film, and also balances the size of the land portion defined by the side portions. Furthermore, as in this example, the side portion (4b1 or 4b2) of one row of the connected sipe 4 and the side portion (4b2 or 4b1) of the adjacent row of the connected sipe 4 adjacent to the one row in the second predetermined direction are preferably arranged so that they overlap each other when projected in the tire circumferential direction. This allows for a much higher density of the connected sipes 4, which is more effective in removing water film.

Note, that in this example, the first side portion 4b1 and the second side portion 4b2 are inclined in the same direction in the tire circumferential direction and extend in the tire width direction, and the connected sipes 4 of the one row and the other row in the adjacent row are symmetrical about the axis along the tire width direction (vertically symmetrical in the figure), so that when the above arrangement is used, the size of the land portion to be defined can be made uniform.

Furthermore, in this embodiment, as illustrated in Figure 1, only one end e1 of the main portion 4a terminates within the land portion 3. In addition, the ends e1 terminating within the land portion 3 are arranged alternately (on one side and the other side in the tire circumferential direction) between two rows adjacent to each other in the second predetermined direction, such that one end 4a in the first predetermined direction of the main portion 4a of the connecting sipe 4 of one row terminates within the land portion 3, and the other end (opposite side) in the first predetermined direction of the main portion 4a of the connected sipe 4 of the other row, which is an adjacent row adjacent to the one row in the second predetermined direction, terminates within the land portion. This can improve on-ice performance by balancing the locations where rigidity reduction is controlled and avoiding localized areas where the rigidity is reduced.

Each of the above effects should be obtained at each land portion, and therefore, it is preferable that all land portions 3 (regardless of whether these are block-shaped land portions or rib-shaped land portions) have the above connected sipes 4.

The connected sipes 4 can be arranged side by side in the tire circumferential direction within a row, except when the main portion 4b1 extends continuously in the circumferential direction. In such a case, as illustrated in Figure 1, it is preferable to dispose one connected sipe 4 in each block (or block-shaped land portion defined by the width-directional sipes 6) for each row. This is because the high density of the connected sipes 4 can further increase the effectiveness of water film removal.

As illustrated in Figure 1, each land portion 3 has a plurality of sub-sipes 7 which are arranged apart from the sipes 4. In this example, the sub-sipe 7 consists of a long side connected to a short side. The long side of the sub-sipe 7 has a configuration that is point symmetrical with the side portions 4b 1 and 4b2 of the connected sipe 4, and the short side of the sub-sipe 7 has a configuration that is point symmetrical with the main portion 4a of the connected sipe 4. The long side of the sub-sipe 7 extends in the tire width direction or at an angle with respect to the tire width direction, and the short side of the sub-sipe 7 extends in the tire circumferential direction. The sub-sipes 7, a portion of the main portion 4a, and the side portions 4b1 (4b2) of the connected sipes 4 are arranged to face each other while being offset in the tire width direction, forming a pair of counter sipes. This allows for even higher density of sipes. In this example, the angle between the long and short sides of the sub-sipe 7 is obtuse. The ratio of the extension length of the long side to the extension length of the short side is preferably between 1 and 15. If the ratio is 15 or less to ensure the length of the short side, the effect of guiding drainage can be sufficient. On the other hand, if the ratio is 1 or more to keep the length of the short side reasonably short, the sipes can be arranged at a high density. As illustrated in the figure, the sub-sipes 7 are arranged in the tire circumferential direction (e.g., at equal intervals), and their short sides lie on the same straight line. The ratio of the length of the counter sipes along the tire circumferential direction to the length of the counter sipes along the tire width direction is preferably between 0.1 and 2.6. If the ratio is 0.1 or more, the distance between the sipes can be secured to ensure block rigidity, while if the ratio is 2.6 or less, $\varphi$ will not be excessive and the length in the width direction will not be too short, so the effect on the braking and driving force can be sufficient.

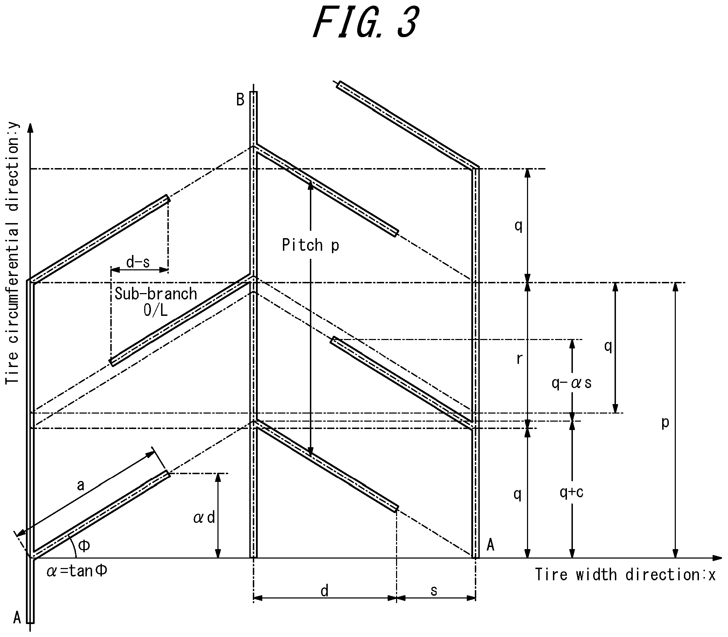

Figure 3 illustrates the dimensions of the connected sipe 4.

As illustrated in Figure 3, when the extension length of the side portions 4b1 and 4b2 of the connected sipe 4 is a (mm), the length in the tire width direction (projected length in the tire width direction) of the side portions 4b1 and 4b2 is d (mm), the distance between the end of the side portion 4b1 (4b2) of one of the connected sipes (the end terminating within the land portion) and the main portion 4a of the connected sipe adjacent to the one of the connected sipes is s (mm), and the inclination angle of the side portions 4b1 and 4b2 with respect to the tire width direction is $\varphi$, it can be expressed as: $d = a \times \cos \varphi$.

Here, s is preferably 1.5 (mm) or more, because a decrease in block rigidity can be further controlled by setting s to 1.5 (mm) or more. It is also preferable that d > s. This is because the side portions can be made to overlap each other when projected in the tire circumferential direction, thereby further increasing the effectiveness of removing water film by the sipe portion consisting of the side portions.

In addition, when the pitch in the circumferential direction between the side portions 4b1 (or 4b2) is p (mm), the clearance distances in the tire circumferential direction between the side portions 4b1 (4b2) of one connected sipe and the side portions 4b2 (4b1) of the connected sipe adjacent to the one connected sipe is q (mm) and r (mm) ($q \leq r$), it can be expressed as: $p = q + r$. Furthermore, the clearance distances in the tire circumferential direction c (mm) between the connection point of the main portion 4a and the branch portion 4b1 in one connected sipe and the connection point of the main portion 4a and the branch portion 4b2 in the connected sipe adjacent to the one connected sipe can be expressed as:

$$c = \alpha \, (d + s) - q, \; \alpha = \tan \varphi,$$

Here, when $q = \alpha \times (d + s)$, c = 0 and the circumferential positions of the branch points of adjacent sipe rows are aligned in the width direction. This ensures continuity in the sipe density of the branch portions with respect to the input in the tire width direction, reducing circumferential variation in block rigidity and providing stable lateral gripping performance. Therefore, a range

of: $q = \alpha \times (d + s) \times 0.8$ to $\alpha \times (d + s) \times 1.2$ is desirable. In particular, when q = p/2, r = q, thus all the sipes in the sipe row are equally spaced in the tire circumferential direction. For this reason, q is preferably in the range of $p/2 \times 0.8$ to $p/2 \times 1.2$, and more preferably q is p/2. This allows for uniform sipe density in the tire circumferential direction in the block-shaped land portion.

EXAMPLES

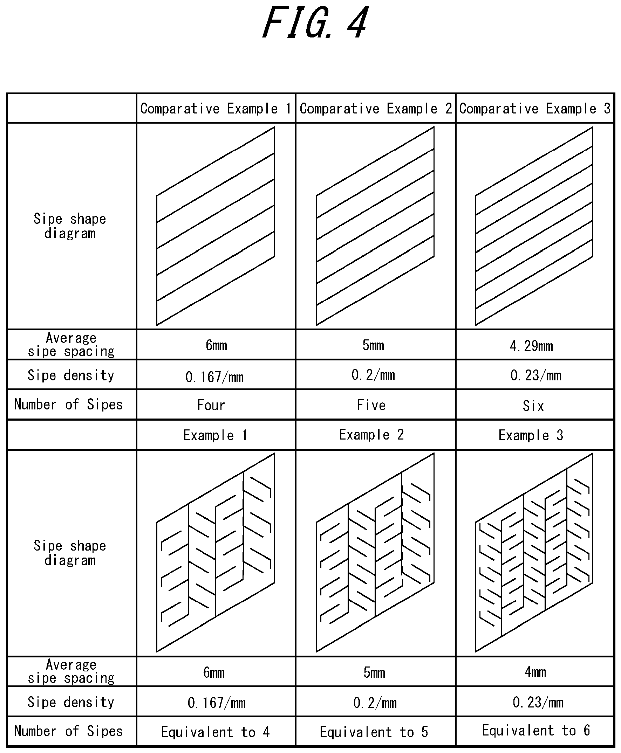

Examples are described below with reference to Figure 4. Figure 4 is a table providing Examples and Comparative Examples.

The Finite Element Method (FEM) simulations were performed on the tires of Examples 1 to 3 and Comparative Examples 1 to 3 provided in Figure 4, and the block rigidity and ground contact area were evaluated under the condition of vertical load, which is obtained by multiplying the contact patch area of the block-shaped land portion at no load by the standard ground contact pressure of 230 kPa for passenger vehicle tires. In Examples 1 to 3 and Comparative Examples 1 to 3, the evaluation was performed as if the sipes illustrated in the sipe shape diagram in Figure 4 were placed on the block-shaped land portions with a maximum length of 30 mm in the tire circumferential direction and a length of 27 mm in the tire width direction, respectively. All sipes had a width of 0.4 mm, a depth of 6.7 mm, and a tip R of 0.2 mm.

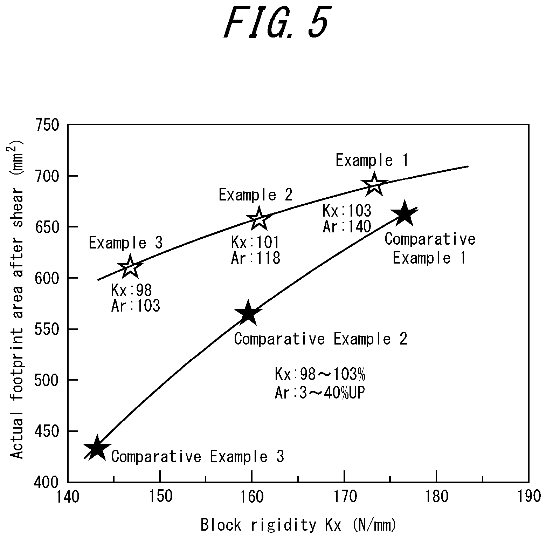

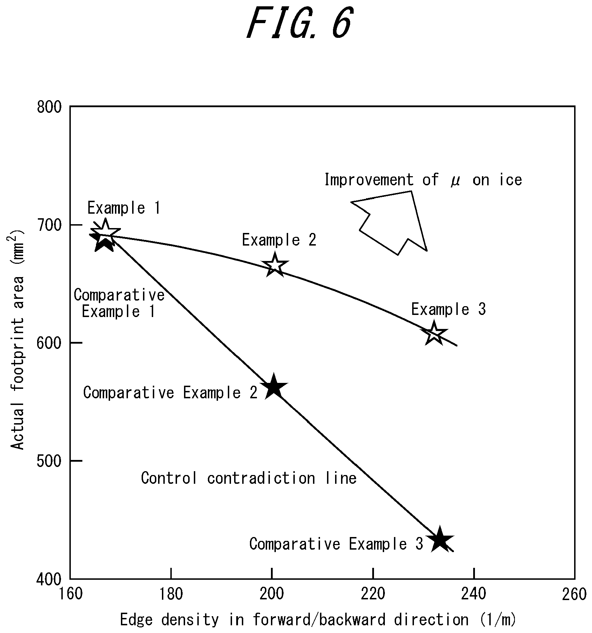

Figure 5 provides the relationship between block rigidity and actual footprint area under shear. Figure 6 provides the relationship between edge density and actual footprint area. Here, the block rigidity Kx (N/mm) is the shear input value in the tire circumferential direction when the lateral displacement in the same direction is 1 mm, and the actual footprint area under shear Ar ($mm^2$) is the residual ground contact area with partial lifting when the shear input in the tire circumferential direction is 0.3 times the above vertical load. As provided in Figure 5, it can be seen that Examples 1 to 3 are able to achieve both block rigidity and actual footprint area compared to Comparative Examples 1 to 3. As provided in Figure 6, it can be seen that the actual footprint area increased for the same edge density in Examples 1 to 3 compared to Comparison Examples 1 to 3.

REFERENCE SIGNS LIST

1    Tread surface
2    Circumferential main groove
3    Land portion
4    Connected sipe
5    Width direction groove
6    Width directional sipe
7    Sub-sipe
8    Width directional sipe

CL    Tire equatorial plane
TE    Tread edge Ref. No. (13/16)

**Claims**

1.  A pneumatic tire having at least one land portion (3) in a tread surface (1), wherein

    one or more connected sipes (4) are disposed on at least one of the land portions (3),
    the connected sipes (4) have a main portion (4a) extending in a first predetermined direction and a side portion (4b1, 4b2) extending from the main portion (4a) to a side of the main portion at an angle with respect to the first predetermined direction and terminating within the land portion (3),
    the side portion (4b1, 4b2) has a first side portion (4b1) disposed on one side of the main portion (4a) and a second side portion (4b2) disposed on the other side of the main portion (4a), and the first side portion (4b1) and the second side portion (4b2) are arranged alternately in the tire circumferential direction;
    wherein the main portion (4a) extends in the tire circumferential direction, and
    the side portion (4b1, 4b2) extends in the tire width direction or at an angle with respect to the tire width direction;
    wherein a length in the tire width direction of the connected sipe (4) is w1 (mm) and a depth of the micro sipes (4a, 4b1, 4b2) comprising the connected sipe (4) is h (mm), and w1 x h is 150 $(mm^2)$ or less, and
    wherein a number of connected sipes (4) in the land portion (3) is n, a maximum width of the land portion (3) in the tire width direction is BW (mm), an equivalent length of the land portion (3) in the tire circumferential direction obtained by dividing an outer contour area $(mm^2)$ of the land portion (3) by BW (mm) is BL (mm), an equivalent number of sipes N is defined as w1 x n/BW, an average sipe spacing in the tire circumferential direction is expressed as BL/(N+1), and a sipe density SD is defined as the inverse of the average sipe spacing in the tire circumferential direction, and is expressed as SD = (N+1)/BL = ((w1 x n/BW)+1)/BL, wherein SD is 0.15 (1/mm) or more.

2.  The pneumatic tire according to claim 1, wherein at least one end (e1, e2) of the main portion (4a) terminates within the land portion (3).

3.  The pneumatic tire according to either of claims 1 or 2, having the land portion (3) in which a plurality of rows of the connected sipes (4) are arranged in a second predetermined direction.

4.  The pneumatic tire according to claim 3, wherein two rows adjacent to each other in the second predetermined direction are arranged in a phase-shifted position in the tire circumferential direction, such that the side portion (4b1, 4b2) of the connected sipe (4) of one row and the side portion (4b1, 4b2) of the connected sipe (4) of the other row, which is an adjacent row adjacent to the one row in the second predetermined direction, are arranged alternately in the tire circumferential direction.

5.  The pneumatic tire according to claim 3 or 4, wherein

    only one end of the main portion (4a) terminates within the land portion (3), and
    the ends (e1, e2) terminating within the land portion (3) are arranged alternately between two rows adjacent to each other in the second predetermined direction, such that one end in the first predetermined direction of the main portion (4a) of the connecting sipe (4) of one row terminates within the land portion (3), and the other end in the first predetermined direction of the main portion (4a) of the connected sipe (4) of the other row, which is an adjacent row adjacent to the one row in the second predetermined direction, terminates within the land portion (3).

**Patentansprüche**

1.  Luftreifen, der mindestens einen Reifenaufstandsflächenabschnitt (3) in einer Lauffläche (1) aufweist, wobei

    eine oder mehrere miteinander verbundene Lamellen (4) auf mindestens einem der Reifenaufstandsflächenabschnitte (3) angeordnet sind,
    die verbundenen Lamellen (4) einen Hauptabschnitt (4a) aufweisen, der sich in einer ersten vorbestimmten Richtung erstreckt, und einen Seitenabschnitt (4b1, 4b2), der sich vom Hauptabschnitt (4a) zu einer Seite des Hauptabschnitts in einem Winkel zur ersten vorbestimmten Richtung erstreckt und innerhalb des Reifenaufstandsflächenabschnitts (3) endet,
    der Seitenabschnitt (4b1, 4b2) einen ersten Seitenabschnitt (4b1), der auf einer Seite des Hauptabschnitts (4a) angeordnet ist, und einen zweiten Seitenabschnitt (4b2) aufweist, der auf der anderen Seite des Hauptabschnitts (4a) angeordnet ist, und der erste Seitenabschnitt (4b1) und der zweite Seitenabschnitt (4b2) in Umfangsrichtung des Reifens abwechselnd angeordnet sind;
    wobei sich der Hauptabschnitt (4a) in Umfangsrichtung des Reifens erstreckt, und sich der Seitenabschnitt (4b1, 4b2) in Richtung der Reifenbreite oder in einem Winkel zur Reifenbreitenrichtung erstreckt;

wobei eine Länge in Reifenbreitenrichtung der verbundenen Lamelle (4) w1 (mm) beträgt und eine Tiefe der Mikrolamellen (4a, 4b1, 4b2), die die verbundene Lamelle (4) umfassen, h (mm) beträgt, und w1 x h 150 (mm$^2$) oder weniger beträgt, und

wobei die Anzahl der verbundenen Lamellen (4) in dem Reifenaufstandsflächenabschnitt (3) n beträgt, die maximale Breite des Reifenaufstandsflächenabschnitts (3) in Reifenbreitenrichtung BW (mm) beträgt, die äquivalente Länge des Reifenaufstandsflächenabschnitts (3) in Reifenumfangsrichtung, die sich aus der Division der Außenkonturfläche (mm$^2$) des Reifenaufstandsflächenabschnitts (3) durch BW (mm) erhalten wird, eine äquivalente Anzahl von Lamellen N als w1 x n/BW definiert ist, ein durchschnittlicher Lamellenabstand in Reifenumfangsrichtung als BL/(N+1) ausgedrückt wird und eine Lamellendichte SD als Kehrwert des durchschnittlichen Lamellenabstands in Reifenumfangsrichtung definiert ist und als SD = (N+1)/BL = ((w1 x n/BW)+1)/BL ausgedrückt, wobei SD 0,15 (1/mm) oder mehr beträgt.

2. Luftreifen nach Anspruch 1, wobei mindestens ein Ende (e1, e2) des Hauptabschnitts (4a) innerhalb des Reifenaufstandsflächenabschnitts (3) endet.

3. Luftreifen nach einem der Ansprüche 1 oder 2, der den Reifenaufstandsflächenabschnitt (3) aufweist, in dem eine Vielzahl von Reihen der miteinander verbundenen Lamellen (4) in einer zweiten vorbestimmten Richtung angeordnet sind.

4. Luftreifen nach Anspruch 3, wobei zwei in der zweiten vorbestimmten Richtung benachbarte Reihen in Umfangsrichtung des Reifens phasenverschoben angeordnet sind, so dass der Seitenabschnitt (4b1, 4b2) der verbundenen Lamelle (4) der einen Reihe und der Seitenabschnitt (4b1, 4b2) der verbundenen Lamelle (4) der anderen Reihe, die eine in der zweiten vorbestimmten Richtung benachbarte Reihe ist, abwechselnd in Umfangsrichtung des Reifens angeordnet sind.

5. Luftreifen nach Anspruch 3 oder 4, wobei

nur ein Ende des Hauptabschnitts (4a) innerhalb des Reifenaufstandsflächenabschnitts (3) endet und

die innerhalb des Reifenaufstandsflächenabschnitts (3) endenden Enden (e1, e2) abwechselnd zwischen zwei nebeneinanderliegenden Reihen in der zweiten vorbestimmten Richtung angeordnet sind, so dass ein Ende in der ersten vorbestimmten Richtung des Hauptabschnitts (4a) der Verbindungsrille (4) einer Reihe innerhalb des Reifenaufstandsflächenabschnitts (3) endet und das andere Ende in der ersten vorbestimmten Richtung des Hauptabschnitts (4a) der Verbindungsrille (4) der anderen Reihe, die benachbart der zweiten vorbestimmten Richtung anliegenden Reihe ist, innerhalb des Reifenaufstandsflächenabschnitts (3) endet.

## Revendications

1. Pneumatique présentant au moins une partie d'appui (3) dans une surface de roulement (1), dans lequel

une ou plusieurs lamelles connectées (4) sont disposées sur au moins une des parties d'appui (3),

les lamelles connectées (4) présentent une partie principale (4a) s'étendant dans une première direction prédéterminée et une partie latérale (4b1, 4b2) s'étendant de la partie principale (4a) à un côté de la partie principale à un angle par rapport à la première direction prédéterminée et se terminant dans la partie d'appui (3),

la partie latérale (4b1, 4b2) présente une première partie latérale (4b1) disposée d'un côté de la partie principale (4a) et une seconde partie latérale (4b2) disposée de l'autre côté de la partie principale (4a), et

la première partie latérale (4b1) et la seconde partie latérale (4b2) sont agencées alternativement dans la direction circonférentielle de pneu ;

dans lequel la partie principale (4a) s'étend dans la direction circonférentielle de pneu, et la partie latérale (4b1, 4b2) s'étend dans la direction de largeur de pneu ou à un angle par rapport à la direction de largeur de pneu ;

dans lequel une longueur dans la direction de largeur de pneu de la lamelle connectée (4) est w1 (mm) et une profondeur des micro-lamelles (4a, 4b1, 4b2) comprenant la lamelle connectée (4) est h (mm), et w1 x h est inférieur ou égal à 150 (mm$^2$), et

dans lequel un nombre de lamelles connectées (4) dans la partie d'appui (3) est n, une largeur maximale de la partie d'appui (3) dans la direction de largeur de pneu est BW (mm), une longueur équivalente de la partie d'appui (3) dans la direction circonférentielle de pneu obtenue en divisant une aire de contour extérieur (mm$^2$) de la partie d'appui (3) par BW (mm) est BL (mm), un nombre équivalent de lamelles N est défini comme w1 x n/BW, un espacement moyen de lamelles dans la direction circonférentielle de pneu est exprimé comme BL/(N + 1), et une densité de lamelles SD est définie comme l'inverse de l'espacement moyen de lamelles dans la direction circonférentielle de pneu, et est exprimée comme SD = (N + 1)/BL = ((w1 x n/BW) + 1)/BL, dans lequel SD est égale à 0,15 (1/mm) ou plus.

2. Pneumatique selon la revendication 1, dans lequel au moins une extrémité (e1, e2) de la partie principale (4a) se termine dans la partie d'appui (3).

3. Pneumatique selon l'une ou l'autre des revendications 1 ou 2, présentant la partie d'appui (3) dans laquelle une pluralité de rangées des lamelles connectées (4) sont agencées dans une seconde direction prédéterminée.

4. Pneumatique selon la revendication 3, dans lequel deux rangées adjacentes l'une à l'autre dans la seconde direction prédéterminée sont agencées dans une position déphasée dans la direction circonférentielle de pneu, de sorte que la partie latérale (4b1, 4b2) de la lamelle connectée (4) d'une rangée et la partie latérale (4b1, 4b2) de la lamelle connectée (4) de l'autre rangée, qui est une rangée adjacente adjacente à la rangée dans la seconde direction prédéterminée, soient agencées alternativement dans la direction circonférentielle de pneu.

5. Pneumatique selon la revendication 3 ou 4, dans lequel

   seule une extrémité de la partie principale (4a) se termine dans la partie d'appui (3), et les extrémités (e1, e2) se terminant dans la partie d'appui (3) sont agencées alternativement entre deux rangées adjacentes l'une à l'autre dans la seconde direction prédéterminée, de sorte qu'une extrémité dans la première direction prédéterminée de la partie principale (4a) de la lamelle de connexion (4) d'une rangée se termine dans la partie d'appui (3), et l'autre extrémité dans la première direction prédéterminée de la partie principale (4a) de la lamelle connectée (4) de l'autre rangée, qui est une rangée adjacente adjacente à la rangée dans la seconde direction prédéterminée, se termine dans la partie d'appui (3).

FIG. 1

# FIG. 2

## FIG. 3

# FIG. 4

|  | Comparative Example 1 | Comparative Example 2 | Comparative Example 3 |
|---|---|---|---|
| Sipe shape diagram | | | |
| Average sipe spacing | 6mm | 5mm | 4.29mm |
| Sipe density | 0.167/mm | 0.2/mm | 0.23/mm |
| Number of Sipes | Four | Five | Six |
|  | Example 1 | Example 2 | Example 3 |
| Sipe shape diagram | | | |
| Average sipe spacing | 6mm | 5mm | 4mm |
| Sipe density | 0.167/mm | 0.2/mm | 0.23/mm |
| Number of Sipes | Equivalent to 4 | Equivalent to 5 | Equivalent to 6 |

# FIG. 5

## FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005186827 A
- JP H0616016 A
- JP 2014193629 A
- JP 2017538627 A
- JP 2009078654 A
- JP H03186407 A
- JP H09328004 A
- EP 3960502 A1